Europäisches Patentamt

European Patent Office

Office européen des brevets

(11) Publication number: **0 076 240**
**A1**

(12) # EUROPEAN PATENT APPLICATION

(21) Application number: 82850069.4

(22) Date of filing: 02.04.82

(51) Int. Cl.³: **B 01 D 21/04**
**B 01 D 21/18**

(30) Priority: 23.12.81 SE 8107761
22.09.81 FI 812945

(43) Date of publication of application:
06.04.83 Bulletin 83/14

(84) Designated Contracting States:
AT BE CH DE FR GB IT LI NL

(71) Applicant: SMAB Svets & Montage i Karlstadt
Aktiebolag
Box 10039
S-650 10 Karlstad(SE)

(72) Inventor: Sjögren, Ivar Emanuel
Box 3518 S Jarpetan
S-655 90 Karlstad(SE)

(72) Inventor: Skoglund, Sven-Olof
Stenbacken 5b
S-681 00 Kristinehamn(SE)

(74) Representative: Hynell, Magnus
I o M Hynell Patent-Tjänst Box 236
S-683 02 Hagfors(SE)

(54) Arrangement of extended sedimentation basins.

(57) An arrangement for extended sedimentation basins and similar installations for removing deposited sediment or other sludge from the bottom of the basin, comprising a traverser (9) which is arranged to be moved from a starting position, normally in conjunction with one short end of the basin, to a receiving end, for example to a sludge hopper or the like, on a path (8) arranged in the basin (1) at such a depth below the water surface (2) that the traverser (9), transported along the path is also located completely below the water surface (2). At the front end and rear end the traverser has one or several scrapers (19) and (20) respectively, or corresponding cleaning devices which extend essentially across the width of the basin (1) and which in the effective cleaning position, when the traverser is moved towards the said sludge hopper (7) or the like, are positioned essentially vertical in respect of the bottom (3) of the basin. The said scrapers (19, 20) are furthermore arranged so that they can be swivelled upwards from the said essentially vertical operating position by means of a cable (25) to an essentially horizontal transport position (19', 20'), when the traverser is to be moved back in the opposite direction towards the starting position. The same cable is also employed for pulling the traverser to and fro in the basin. The arrangement can also be supplemented by a unit for surface scraping, in that an upper scraper (60) mounted on the bridge is arranged to adopt a working position in the surface layer of the basin by causing the bottom scrapers to change their working position. A safety device is so designed that the cable drive ceases if the cable tension drops considerably and if the cable tension does not revert to its normal value within a certain period of time.

./...

EP 0 076 240 A1

Fig.1.

# ARRANGEMENT OF EXTENDED SEDIMENTATION BASINS

The invention relates to an arrangement of extended sedimentation basins and similar installations for the removal from the bottom of the basin of sediment or other sludge which has collected there. The invention relates particularly to a scraper, which moves to and fro, for transporting the sediment towards a collection hopper or the like at one end of the basin. In accordance with one embodiment of the invention a scraper which is coordinated with the bottom scraper is provided for surface scraping. A further embodiment of the invention relates to a safety arrangement for a cross-conveyor sludge scraper which moves to and fro and which is driven by a tensioned cable.

As a rule in existing sedimentation basins chain scrapers are employed to remove the sludge which gradually settles on the bottom of the basin. These chain scrapers consist of one or more scraper blades which extend transversely across the bottom of the basin and which are pulled forwards by means of continuously moving chains. These designs exhibit certain advantages. They provide efficient cleaning and furthermore are reliable in their function, provided that the structure is intact. However in spite of their solidity, serious breakdowns occur much too frequently. These are generally due to the severe corrosion which all the components, including the chains, are subjected to. This is because the environment in the sedimentation basins of treatment plants is extremely corrosive because of the chemical precipitation stage in the sewage treatment plant where certain iron and aluminium salts are employed during the precipitation of phosphates in the water.

Designs other than chain scrapers have already been proposed. In accordance with a previously-proposed design concept a cross-conveyour (traverser) is used which is driven forward across the surface of the water in the sedimentation basin. A scraper, which can be raised or lowered, is mounted on arms from the traverser. One disadvantage of this design is that it is difficult to employ it on existing sedimentation basins which are often equipped with various items of equipment over the basin, such as gangways etc.

The suggestion has also been made that an arrangement resembling a traverser and which moves in the water should be employed, but this has not become widely popular, possibly because of the complicated nature of the design aimed at preventing the scraper blade stirring up the sludge. On returning to its starting position at one end of the basin, the scraper blade together with the framework which holds the scraper blade together is lifted up by means of a pair of arms which extend downwards from the traverser. The design is essentially relatively complicated and hence also unreliable in operation, which is probably one reason for the fact that the arrangement has not become generally popular. In spite of the fact that the scraper blade is raised in the return position it is even so not possible to prevent the equipment interfering with the sedimentation operation during the return stroke.

The aim of the invention is to provide an arrangement in which the above-mentioned disadvantages and limitations have been eliminated. The arrangement is characterised by a traverser which is so arranged that it can be guided from one short end of the basin to the other on a track arranged in the basin at such a depth underneath the water surface that the traverser which is transported on the track is also located completely under the water surface. At each end the traverser has one or more scrapers or corresponding cleaning devices which extend essentially across the width of the basin and which in the effective cleaning position, when the traverser is led towards a sludge hopper or the like, are positioned essentially vertically in respect of the bottom of the basin, whilst the said scrapers are so arranged that from the said essentially vertical operating position they are adjusted to an essentially horizontal transport position when the traverser is to be moved in the opposite direction.

Preferably it is also an aim of the invention to provide a scraper, coordinated with the bottom scrapers, for surface scraping. This can be achieved in that an upper scraper which is supported by the traverser is arranged to adopt its operating position in the surface layer of the basin by causing the bottom scrapers to change their operating position.

A drive motor is provided for driving the traverser to and fro which via a drum can drive a steel cable in one or other direction. The cable is so arranged that at the same time as it drives the traverser i also actuates the scraper blades in such a way that they are placed in the vertical cleaning position when the traverser is driven in one direction, and in the horizontal resting position when the traverser is driven in the other direction. At one end of the basin a drum is provided which drives the drive cable in one or other direction. At the other end of the basin there is a guide wheel. The cable is led from the traverser over the drive pulley to the guide wheel and back to the traverser. Inside the bridge the cable run is so arranged that the scraper blades are actuated alternately so that when running in one direction they adopt a vertical position and when running in the other direction they adopt a horizontal position.

If however the drive cable should break the drive machinery can continue to pull the bridge which is provided with scrapers. The scrapers can then push the dropped cable in front of them and this can cause considerable damage to the scraper and to the other equipment in the basin. Experiments have been made to install breakers of the conventional type in such a way that they sense the tensioned cable. In the event of cable breakage the drive can thus be stopped. Arrangements of the said type suffer however from the disadvantage that they easily react to considerable reductions in line tension which are inevitable in conjunction with the reversal of the direction of movement of the bridge, where at the same time changeover of the scrapers takes place. This means that breaking arrangements which sense the line tension must be able to perform movements with considerable deflection without disconnecting the drive, the latter occurring only when the deflection is so great that a certain maximum limit is exceeded. Such arrangements are extremely prone towards breakdown, which in turn involves frequent operational shutdowns on the part of such installations. Such operational breakdowns are expensive because as a rule the installations are operated continuously, which means that personnel have to be summoned specially for purposes of repair and re-starting.

One objective in one embodiment of the invention is hence also to offer an arrangement in which the above-mentioned disadvantages and limitations have been eliminated. The embodiment is characterised in that it comprises devices which ensure that the cable drive is stopped if the cable tension drops considerably and if the cable tension is for a certain period of about two minutes less than a certain value. The safety device is so designed that it operates if the cable tension drops considerably and if, within a certain period of preferably 1-2 minutes which is governed by the said safety device design, the cable tension does not resume its normal value.

When the traverser changes its direction of movement in the position nearest the guide wheel the cable tension between the drive pulley and the guide wheel reduces considerably for a certain period of time which is governed by the design of the traverser and the scrapers. Hence the cable drive will be interrupted only if the reduction in cable tension persists for a period of time longer than that required for reversing the direction of movement at one end of the basin. Hence the safety device does not disconnect the cable drive in conjunction with reversal of the direction of movement of the traverser at the said end of the basin.

Further features and aspects together with advantages of the invention will be indicated by the following description of the preferred embodiments and by the appending patent claims.

5

In the following description of the preferred embodiments reference will be made to the appended diagrams in which:

Fig. 1 is a side view of the arrangement in accordance with the invention in which a sedimentation basin is shown in section,

Fig. 2 shows the same arrangement from the top, where only parts of the sedimentation basin are illustrated,

Fig. 3 shows a side view of devices for surface scraping in accordance with one embodiment of the invention,

Fig. 4 gives a view along IV-IV in Fig. 3 and

Fig. 5 illustrates a tensioning device at one end of the sedimentation basin together with a safety device in accordance with one embodiment of the invention.

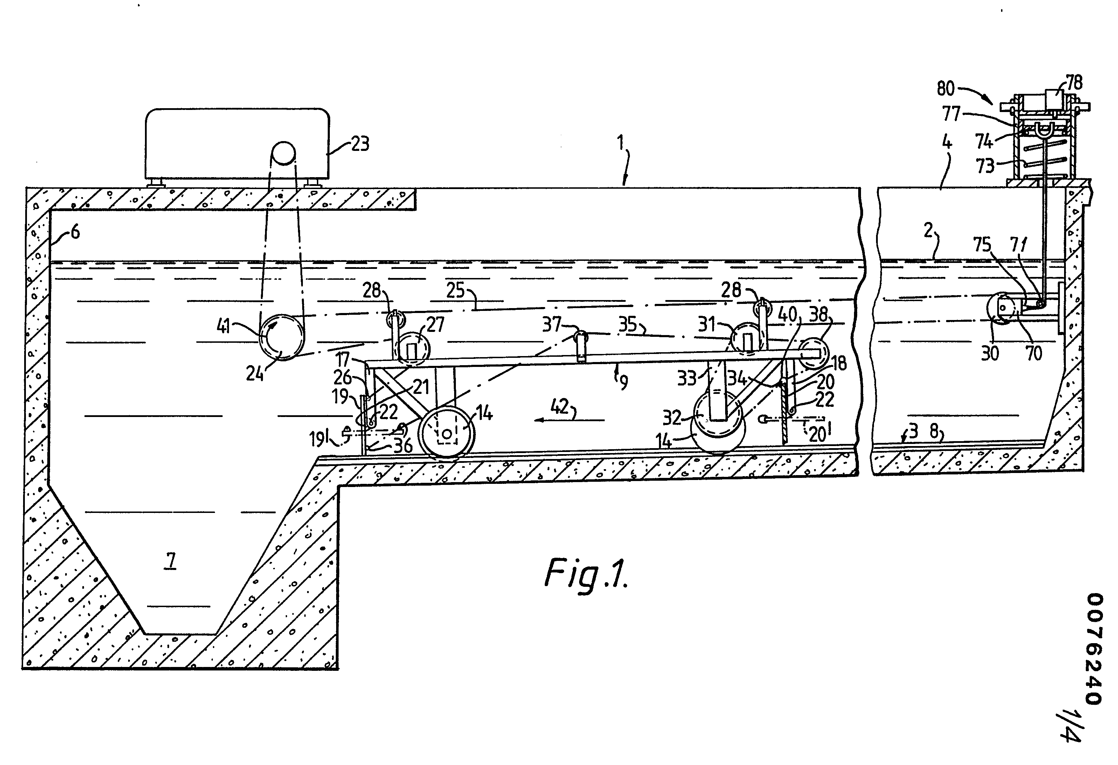

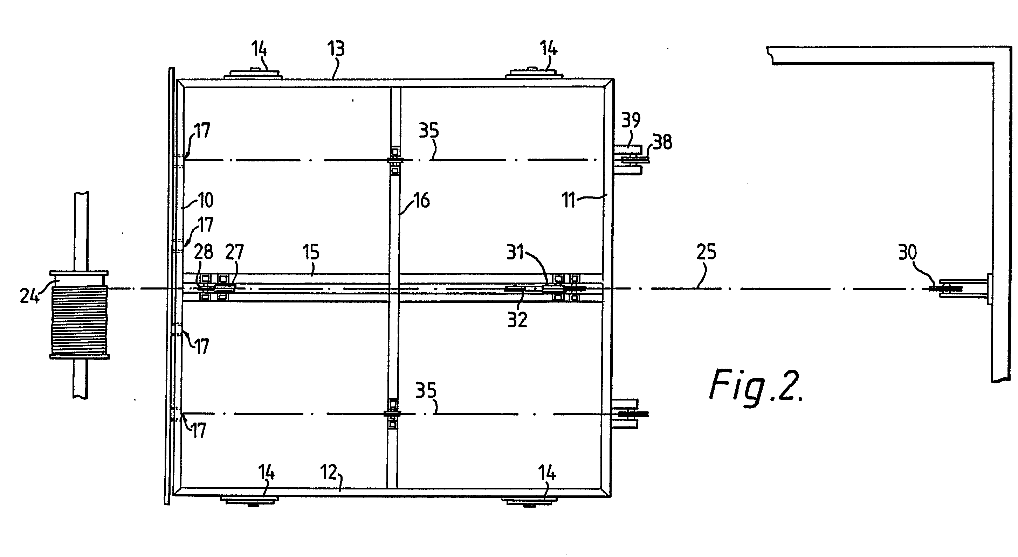

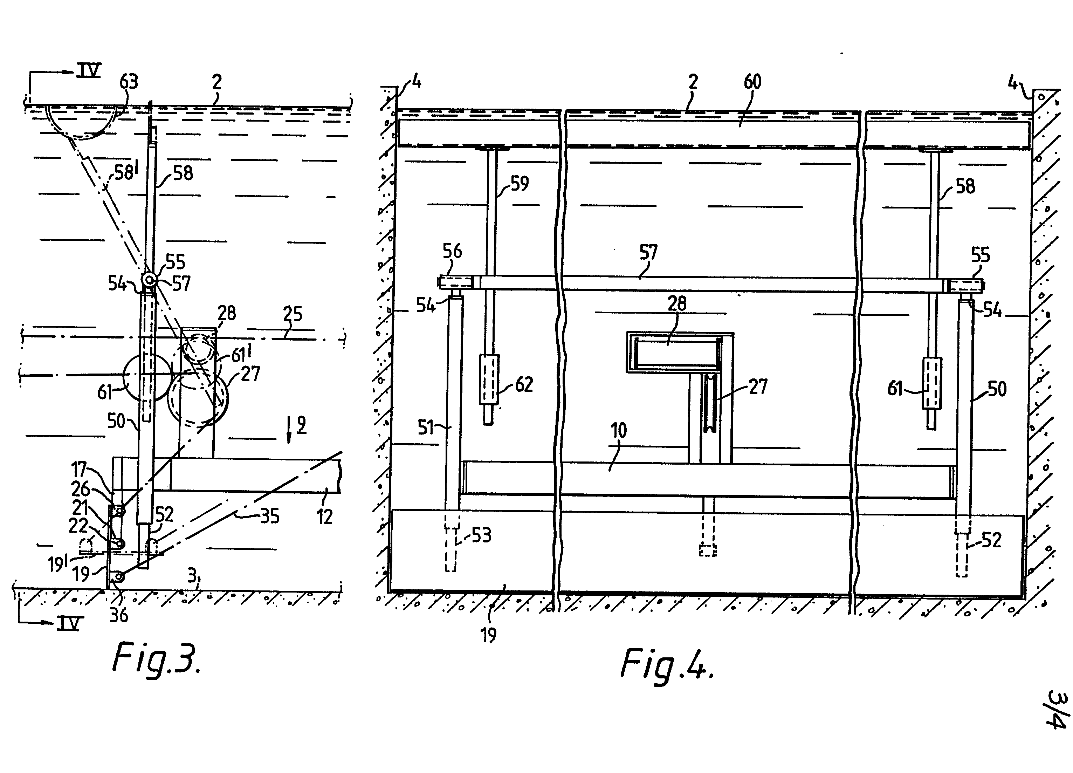

Referring to Fig. 1 and Fig. 2, an elongated sedimentation basin is generally designated by 1. The water level is designated as 3. The sedimentation basin 1 is confined by a bottom 3, a pair of long sides 4, a rear short end 5 and a front short end 6. A sludge hopper 7 is provided at the front end. A pair of bottom rails 8 close to the long sides 4 are provided on the bottom 3.

A traverser in the form of a trolley 9 is provided on the bottom rails 8. This consists of a rectangular frame with forward and rear frame girders 10 and 11 and side frame girders 12 and 13. The trolley 9 runs on the rails 8 on four wheels 14. A centre girder 15 extends between the front and rear frame girders, and a cross girder 16 extends at a certain height above the frame between the side girders.

A number of arms 17 and 18 respectively extend vertically downwards from the front and rear frame girders 10 and 11. At the lower end of these arms 17 and 18 are mounted a front and rear scraper blade 19 and 20 respectively. Each scraper blade 19 and 20 is hinge-mounted on the arms 17 and 18. More specifically, each scraper blade 19 and 20 has a number of lugs or bearing brackets 21 distributed along a centre line to each scraper blade, the said bearing brackets 21 arranged so as to interact with a pivot pin 22 which extends through the lower end of the arms 17 and 18. By twisting in this pivot the scraper blade 17 can be swung from a vertical scraping position, when the scraper 19 rests against the front side of the arms 17 and there it is supported from the rear by the arms 17 when the trolley 9 is moved forward in the direction of arrow 22, to a horizontal inoperative position underneath the arms 17. In the latter position, designated as 19', the scraper blade 19 is indicated by dashed marking. In a corresponding manner the rear scraper blade 20 can be dropped from a vertical position in front of the arms 18 to a horizontal position 20' below the arms 18.

A drive motor 23 is provided for moving the trolley 9 forward and backwards and via a drum 24 this can drive a steel cable 25 in one or other direction. One end of the cable 25 is fastened in a lug 26 close to the upper/forward edge of the front scraper blade 19 and then extends over a guide roll 27 on the centre girder 15 to the drum 24 which accommodates a number of turns of the cable 25. Then the cable 25 extends to the rear end 5 of the basin 1, and a pair of support rollers 28 on the centre girder 15 prevent the cable from impacting against the trolley 9. At the rear end 5 of the basin a bracket 29 with guide wheel 30 is provided. The cable 25 extends around this guide wheel 30 and around a rear guide wheel 31 on the centre girder 15 of the trolley. Furthermore the cable 25 passes around a lower guide wheel 32 mounted on a pair of downward-facing arms on the centre girder 15, so that the lower portion of the lower guide wheel 32 extends to a level underneath the pivot 22 at the bottom end of the arms 18. Finally the cable 25 is fastened in a lug 24 in the upper/forward edge of the rear scraper blade 20. Furthermore the two scraper blades 19 and 20 are interconnected with each other by a pair of cables 35. Each cable 35 extends from a fixing lug 36 close to the lower/rear edge of the forward scraper blade 19 via a supporting roll 37 on the transverse girder 16 and a guide roller 38 arranged between a pair of brackets 39 at the rear of the rear frame girder 11 to a further fixing lug 40 on the upper/forward edge of the rear scraper blade 20.

If required the cables 25 and 26 can be made of stainless or acid-resistant steel. An appropriate speed for the trolley 9 is 0.5 - 1 m/min.

Fig. 3 and Fig. 4 illustrate an embodiment of the invention, namely a surface scraping arrangement which is mounted on the trolley 9 and coordinated with the bottom scrapers 19 and 20. For components which correspond to those in Fig. 1 and Fig. 2 the same notation has been employed as in these diagrams. In accordance with the embodiment a tubular guide 50, 51 is arranged on each side frame girder 12 and 13 respectively. The guides 50, 51 are vertical and can be mounted by means of screw connections. A pair of guide rods 52 and 53 respectively with an upper stop flange 54 are mounted in the guides 50, 51. A horizontal bearing 55 and 56 respectively is welded onto the upper ends of the guide rods 52, 53. A horizontal shaft 57 is mounted in the bearings 55, 56. A pair of arms 58 and 59 which can be rotated around the axis of rotation of shaft 57 is welded onto the horizontal shaft 57. Between the upper ends of the arms 58 and 59 there is an upper scraper blade 60 which extends between the long sides 4 of the basin. A pair of counterweights 61 and 62 respectively are arranged at the lower ends of the arms 58 and 59.

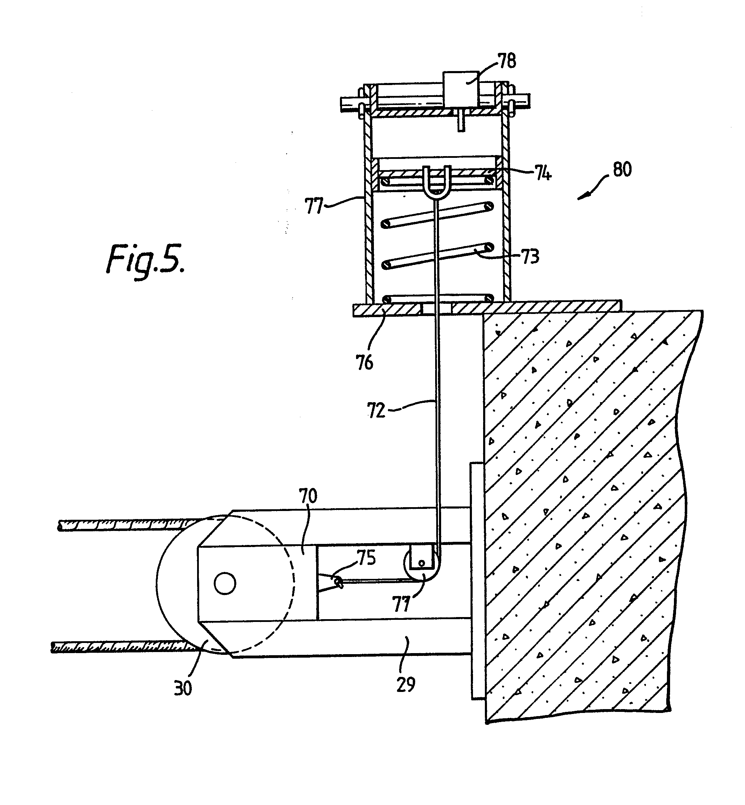

The safety device will now be explained by reference to Fig. 5. The guide wheel 30 is mounted in a yoke 70 which can move with respect to the bracket 29. The movable yoke 70 is so arranged that it can move to and fro in the bracket 29 in the lengthwise direction of the basin. The yoke 70 is provided with a shackle 75 which grips a tensioning cable 72. The said cable 72 is run around a guide pulley 71 to a spring tensioning arrangement 80 which consists of a tubular outer casing 77, a tensioning spring 73, an anchor plate 74, a stop shaft 79 and breaker with time delay 78. The tensioning arrangement 80 is mounted on a plate 76 which in turn is bolted onto the side of the basin.

The arrangements described by reference mainly to Fig. 1, Fig. 2 and Fig. 5 function as follows. During the rotation of the drum 24 by means of motor 23 in the direction shown by arrow 41, the cable 25 is tensioned and pulls the trolley 9 smoothly forward in the direction shown by arrow 22 by pulling in the fixing lug 26 in the forward scraper blade 19. At the same time as trolley 9 is driven forward, the scraper blade 19 is maintained in the vertical position by being pressed against the arms 26. At the same time the connecting cables 35 between the forward and rear scraper blade are tensioned so that the rear scraper blade 20 is also maintained in an absolutely vertical direction because the scraper blade 20 is pressed against the rear arms 18. Gradually, as trolley 9 advances in this way in the direction shown by arrow 22 the blades 19 and 20 scrape the bottom 3 of the basin 1 so that the deposited sludge is driven towards the sludge hopper 9. When the trolley 9 has reached a forward extreme position, further feed in this direction is stopped by means of a limit switch. The motor 23 now changes direction. The drum 24 rotates in the opposite direction, cable 25 then drops the rear scraper blade 20 by tensioning the cable towards the lower guide wheel 32 via the cables 35, the forward scraper blade 19 is dropped correspondingly to the horizontal position 19' by pulling in the lower/rear lugs 36, after which the trolley 19 is driven backwards towards the rear end 5 into a position governed by a rear limit switch. Then the motor changes direction once again, scraper blades 19 and 20 are again dropped downwards and the trolley 19 is once more driven smoothly forwards towards the sludge hopper 7. In the final phase the front scraper blade 19 also entrains the quantity of sludge which has been driven during the preceding working cycle forward by the rear scraper blade 20 and which has collected between the front and the rear scraper blade in front of sludge hopper 7.

When the traverser changes its direction of movement so that it approaches the rear short end 5 of the basin, the cable tension between the drive wheel and the guide wheel 30 is considerably reduced. The reduction in cable tension persists during the period required to change over the scrapers from a horizontal to a vertical position. During the said period of time the traverser will remain stationary and when the traverser once again starts to move towards the forward short end 6 of the basin the tension in the cable between the drive wheel and guide wheel 30 once again increases. When the cable tension drops considerably, the tensioning yoke 70, Fig. 5, is transferred towards the rear short end 5 of the basin, and as a result the plate 74 is moved upwards under the influence of spring 73. In conjunction with a reversal of the direction of movement of the traverser the reduction in tension can be so great that the plate 74 is moved to a sufficient height to affect the circuit breaker with time delay 78. The circuit breaker 78 is so arranged that supply of current to the cable drive is interrupted if for a certain period the said circuit breaker 78 is actuated by the plate 54. The period of time during which actuation must be provided from plate 74 for the drive to be interrupted can be adjusted. Hence the circuit breaker can be set for example to give delayed disconnection of the cable drive if the circuit breaker is subject to the influence of plate 74 for a period of 2 minutes. The circuit breaker can also be so designed that it has for example a fixed time delay of 2 minutes. The time delay depends on the design of the scraper arrangement in the sedimentation basin.

Hence the design of the safety arrangement illustrated in Fig. 5 permits the cable tension to reduce considerably in conjunction with reversal of the direction of movement of the traverser without the drive to the cable being interrupted. In the event of cable breakage the guide wheel 30 is moved towards the short end 5 under the influence of spring 73. The plate 74 then influences the circuit breaker 78 for a period which exceeds the pre-set delay time and as a result the drive to the cable ceases.

The arrangement shown in Fig. 3 and Fig. 4 function as follows. In the position illustrated in the diagrams the scraper blade 60 is located under the water surface 2. At the same time the lower scraper blades 19 and 20 are dropped into the operating position. This signifies that when the trolley is moved forwards and scrapes the bottom sludge, the surface scraper 60 is inoperative. When the bottom scraper 19 is moved upwards, when the trolley is to return to the opposite end of the basin, the lower portion of the bottom scraper 19 rests against the lower ends of the guide rods 52 and 53, which for this purpose have been orientated in the manner illustrated in the diagrams so that the rods 52 and 53 are lifted up in the guides 50, 51. To facilitate sliding between the scraper blade 19 and the guide rods 52 and 53, the scraper blade 19 can be provided with a guide rail at its rear. Alternatively a roller can be provided at the lower ends of the guide rods 52 and 53. The guide rods 52, 53 raise the shaft 57 which in turn via arms 58 and 59 raises the scraper blade 60 into the operative position in the surface layer 2. The object of the rotable shaft 57 is that the scraper blade 60 should be able to deflect downwards when traversing obstacles on the water surface, e.g. to deflect downwards on meeting a sludge trough 63. This is illustrated in Fig. 3 by the dash-dot marked position 58' of arm 58. When the obstacle 63 has been passed the counterweights 61, 62 restore the arms 58, 59 to a vertical position so that the surface scraper 60 reverts to its operative position in the surface layer.

Modifications to the arrangement in accordance with the invention can be executed within the framework of the concept of the invention as defined in the following patent claims. Instead of a traverser in the form of a trolley on wheels it is thus possible to imagine a bridge with runners, where the traverser is pulled on a bed of a suitable nature. It is certainly not essential that the traverser/trolley runs on rails or a similar sub-surface on the bottom of the basin. Hence it is as such possible to arrange the running rails or the like somewhat higher in the basin, provided that the trolley does not project beyond the surface of the water.

However normally no particular advantage is achieved with such an arrangement, it usually being an advantage to be able to run the trolley direct on the bottom.

The equipment for surface scraping can also be varied in a number of different ways. Hence for example we can conceive that the upper scraper blade 60 in its inoperative position is above the surface of the water 2 so that, when the lower scraper blade drops to the operating position, the former is dropped to the operative position in the surface layer 2. This means that the surface scraper 60 in this case is effective simultaneously with the bottom scrapers 19 and 20. It is also possible to envisage that the surface scraper 60 in its inoperative position is horizontal, in the same way as are the bottom scrapers 19 and 20, it then being raised to the vertical position when the surface scraper is to adopt its working position. This can for example be brought about by means of a coupling being inserted in the cable 35 which, interacting with the frame girders 12 and 13, transmits a rotary movement, for example via a rod coupling, to the upper scraper blade which can be rotably mounted around a horizontal shaft which is mounted on a pair of vertical rods connected with the trolley. By means of such an arrangement it is possible to achieve the further advantage that turbulence can be largely eliminated also in the surface layer when the trolley is moved forwards with the upper scraper blade in the inoperative position. It is also possible to provide a double set of upper scraper blades, if required.

As regards modifications to the safety arrangement as shown in Fig. 5, the circuit breaker 78 can for example be arranged so that it is actuated by an arm or other vertical device proceeding directly from the yoke 70, whilst the tensioning spring 73 can be replaced by a tensioning weight.

PATENT CLAIMS

1. Arrangement for elongated sedimentation basins and similar installations for removing deposited sediment or other sludge from the bottom of the basin, c h a r a c t e r i s e d  in that it comprises a traverser (9) which is arranged to be capable of being moved from a starting position, usually in connection with one short end of the basin, to a receiving end, e.g. to a sludge hopper or the like, on a track (8) arranged·in the basin (1) at such a depth under the surface (2) of the water that also the traverser (9) which is transported along the track is located completely below the surface of the water (2), that the traverser at its front end and rear end is provided with one or several scrapers (19 and 20 respectively) or corresponding cleaning devices which extend essentially over the width of the basin (1) and which in the effective cleaning position when the traverser is moved towards the said sludge hopper (7) or the like are positioned essentially vertically towards the bottom (3) of the basin, and that the said scrapers (19, 20) are so arranged that they can be swivelled upwards from the said essentially vertical operating position to an essentially horizontal transport position (19', 20'), when the traverser is to be moved backwards in the opposite direction to its starting point.

2. Arrangement as in claim 1, c h a r a c t e r i s e d  in that the said scrapers (19, 20) are arranged to be swivelled downwards and upwards by means of a cable (25) which at the same time is arranged to pull the traverser forwards towards or respectively rearwards away from the said sludge hopper or the like.

3. Arrangement as in claim 2 c h a r a c t e r i s e d  in that the scrapers are arranged to be swivelled into the horizontal position in that the same cable is pulled in the opposite direction so as to lead the traverser back to its initial position.

4. Arrangement in accordance with any of claims 1-3 c h a r a c ÷ t e r i s e d  in that the forward and rear scrapers (19, 20) are joined by one or several cables (35) arranged to transmit traction forces between the scrapers.

5. Arrangement in accordance with any of claims 1-4, c h a r a c -
t e r i s e d in that when the scrapers (19, 20) are in the
vertical scraping position their upper portions are pressed against
supporting devices (17, 18) on the traverser.

6. Arrangement as in claim 5, c h a r a c t e r i s e d in that
the scrapers are hinge-connected with the said supporting devices
(17, 18), preferably in the vicinity of a line between the upper/
forward and lower/rear edges of the scrapers.

7. Arrangement as in any of the preceding claims, c h a r a c -
t e r i s e d in that the said tension cable (25), the connecting cable/cables (35) between the scrapers (19, 20) and preferably also one of the actual scrapers together form an endless loop.

8. Arrangement in accordance with any of the preceding claims,
c h a r a c t e r i s e d by an upper scraper (60) which is
mounted on the said traverser being arranged to adopt the working
position in the surface layer of the basin by making the bottom
scrapers (19, 20) change their working position.

9. Arrangement as in claim 8, c h a r a c t e r i s e d in that
the surface scraper is arranged to adopt the working position in
the surface layer by means of actuating devices (52, 53, 57, 58,
59) connected to the bottom scrapers (19) or to the connecting
cable/cables 35 between the bottom scrapers.

10. Arrangement as in claim 9, c h a r a c t e r i s e d in that
the surface scraper is arranged to adopt the said working position by being lifted up or swivelled up or dropped or swivelled
downwards by the said actuating devices into the surface layer.

11. Arrangement as in any of claims 1-10, c h a r a c t e r i -
s e d in that the traverser is so arranged that it can be moved
to and fro in the basin by means of the said cable which is pretensioned, and that devices (80) are provided which are arranged to stop the cable drive if the cable tension drops considerably and if within a certain period of time governed by the design of the said device, preferably 1 to 2 minutes, the cable tension does not revert to its normal value.

12. Arrangement as in claim 11, c h a r a c t e r i s e d in that it comprises a tensioning arrangement (80, 77, 70) which ensures that the cable (25) in kept under tension by means of a springloaded guide wheel (30), that the guide wheel (30) performs a translatory movement when the cable tension drops, and that it comprises devices which ensure that the cable drive ceases when the said spring loaded tensioning pulley (30) is moved from its normal operating position to a position which corresponds to lower cable tension and if the said tensioning pulley (30) has not, within a certain period of time which is preferably 1 to 2 minutes, reverted to its normal operating position.

13. Arrangement as in claim 12, c h a r a c t e r i s e d in that the said devices (78) which stop the cable drive comprise a flux breaker with delayed breaking function which can break a flux which controls the cable drive, whereby the said flux breaker is arranged to be actuated by a translatory displacement of the guide pulley 30.

14. Arrangement as in claim 13, c h a r a c t e r i s e d in that the said flux breaker (78) comprises an electrical circuit breaker with delayed circuit breaking function.

Fig.1.

0076240  1/4

Fig.2.

Fig.4.

Fig.3.

Fig.5.

**0076240**
Application number

European Patent
Office

**EUROPEAN SEARCH REPORT**

EP 82 85 0069

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-2 768 749 (E.E.EASTERDAY)<br><br>*Column 2, lines 35-72; columns 3-11* | 1,2,5,<br>6,11,<br>12 | B 01 D 21/04<br>B 01 D 21/18 |
| Y | US-A-2 866 557 (E.E.EASTERDAY)<br>*Columns 2-6* | 1,3 | |
| Y | GB-A- 746 604 (C.J.HARTLEY)<br>*Page 2, lines 45-64* | 8,9,10 | |
| A | GB-A-1 504 518 (SIMON ENGINEERING) | | |
| A | US-A-1 986 573 (HARLOWE HARDINGE) | | |

TECHNICAL FIELDS
SEARCHED (Int. Cl. ³)

B 01 D
C 02 F

The present search report has been drawn up for all claims

| Place of search<br>THE HAGUE | Date of completion of the search<br>27-09-1982 | Examiner<br>DE PAEPE P.F.J. |
|---|---|---|